# FASCICULE DE BREVET EUROPEEN

(11) **EP 4 282 582 B1**
(45) Date de publication et mention de la délivrance du brevet: **07.10.2026**
(21) Numéro de dépôt: 22175352.8
(22) Date de dépôt: 25.05.2022
(51) Int. Cl.: B23Q 17/24

(54) **PROCÉDÉ DE DÉTERMINATION DE LA POSITION D'UNE PIÈCE DANS UN REPÈRE ORTHONORMÉ BASÉ SUR UNE STRUCTURE D'UNE MACHINE-OUTIL À COMMANDE NUMÉRIQUE**
VERFAHREN ZUR BESTIMMUNG DER POSITION EINES WERKSTÜCKS IN EINEM ORTHONORMALEN BEZUGSPUNKT, DAS AUF EINER STRUKTUR EINER NUMERISCH GESTEUERTEN WERKZEUGMASCHINE BASIERT
METHOD FOR DETERMINING THE POSITION OF A PART IN AN ORTHONORMAL FRAME OF REFERENCE BASED ON A STRUCTURE OF A MACHINE TOOL WITH DIGITAL CONTROL

(43) Date de publication de la demande: 29.11.2023
(73) Titulaire: Universo S.A., 2300 La Chaux-de-Fonds (CH)
(72) Inventeur: MEYER, Denis, 2300 La Chaux-de-Fonds (CH)
(74) Mandataire: ICB SA

(56) Documents cités:
- WO-A1-2017/009615
- DE-A1- 102016 001 337
- JP-A- S62 124 858
- US-A1- 2008 239 326

## Description

### Domaine technique de l'invention

L'invention relève du domaine des machines-outils à commande numérique, et notamment des accessoires et ouillages pour machines-outils à commande numérique.

Plus particulièrement, l'invention concerne un procédé de détermination d'une position d'origine pièce dans une machine-outil à commande numérique, et un système destiné à la mise en œuvre dudit procédé.

### Arrière-plan technologique

Une machine-outil à commande numérique, appelée « machine-outil » dans la suite du texte, est une machine adaptée à commander le déplacement d'un outil sur la base d'instructions d'une unité de commande, typiquement d'un ordinateur, pour réaliser des opérations sur une pièce fixée dans une enceinte de la machine-outil. Les opérations peuvent consister en un enlèvement de matière, par exemple un usinage, un polissage, etc., en des opérations d'assemblage, tel que du soudage, du collage, etc., ou en toute autre opération susceptible d'être mise en œuvre par une action d'un outil sur une pièce.

Les instructions sont transmises sous la forme d'un programme informatique. Le déplacement de l'outil est réalisé à partir d'une position d'origine d'un point de l'outil destiné à agir sur la pièce, ladite position d'origine étant appelée communément « origine programme » et étant caractérisée par des coordonnées dans un repère orthonormé normalisé basé sur la structure de la machine. L'origine programme est définie par un opérateur.

Le déplacement de l'outil est déterminé suivant la position de la pièce au sein de ladite structure, cette position étant caractérisée par des coordonnées d'un point appelé « origine pièce ».

Afin de réaliser des opérations sur la pièce respectant des exigences de précision importantes, il est nécessaire de connaitre avec exactitude la position de l'origine programme et de l'origine pièce l'une relativement à l'autre.

A cet effet, des solutions ont été développées mettant en œuvre des capteurs optiques disposés dans des enceintes des machines-outils et adaptés à identifier la position dans l'espace de l'origine pièce, et en particulier la position d'un objet de référence sur la pièce définissant l'origine pièce, par exemple une extrémité d'une arête, le centre d'un trou, etc. Ces capteurs optiques communiquent la position de l'origine pièce ainsi mesurée à l'unité de commande et la trajectoire de l'outil peut être déterminée à partir de l'origine programme et de l'origine pièce avec une grande précision.

Pour identifier la position d'un objet de référence, les capteurs optiques se basent sur des différences de contraste d'une image acquise de la pièce. Plus particulièrement, une différence de contraste est déterminée entre une surface en premier plan, par exemple défini par une première face de la pièce, et une surface en arrière-plan, par exemple définie par une seconde face de la pièce ou une face d'un support de la pièce. La différence de contraste est par exemple provoquée par une différence de matériau, d'état de surface, etc. entre les surface en premier et en arrière-plan.

Il existe cependant des limites à ces capteurs optiques, dans la mesure où ils peuvent ne pas reconnaitre certains objets de référence dans des circonstances particulières. En effet, lorsque le premier plan et l'arrière-plan présentent une différence de contraste insuffisante pour être dissociés par les capteurs optiques, ces derniers sont susceptibles de réaliser des mesures erronées. Ces mesures erronées peuvent conduire à la production de pièces ne correspondant pas aux exigences de fabrication, et donc peuvent être à l'origine d'importants problèmes de qualité. US 2008/239326 A1 décrit un procédé de détermination de la position d'une pièce selon le préambule de la revendication 1.

La présente invention propose de résoudre cet inconvénient et vise, par conséquent, à assurer la précision de l'identification de la position de l'origine pièce en toutes circonstances, et donc, vise à garantir le respect des exigences de qualité des pièces réalisées à la suite de cette identification.

### Résumé de l'invention

L'invention résout les inconvénients précités en proposant une solution permettant l'identification de la position d'une origine pièce en toutes circonstances.

À cet effet, l'invention concerne un procédé de détermination de la position d'une pièce dans un repère orthonormé basé sur une structure d'une machine-outil à commande numérique afin de déterminer la trajectoire d'un outil pour la réalisation d'une opération sur ladite pièce.

Le procédé comporte les étapes de :
- maintien en position de la pièce sur un support fixé dans une enceinte de ladite machine-outil, de sorte à agencer un trou traversant que comporte la pièce en regard d'un orifice traversant que comporte le support, ledit trou débouchant entièrement dans ledit orifice,
- éclairage par une source lumineuse, de sorte à émettre un rayonnement lumineux depuis le support, vers un appareil de mesure optique agencé dans l'enceinte de la machine-outil, à travers le trou et l'orifice,
- lecture de la pièce par l'appareil de mesure optique, de sorte que ce dernier détermine la position de ladite pièce dans le repère orthonormé.

Avantageusement, le procédé comprend, avant l'étape d'éclairage, une étape d'intégration de la source lumineuse au sein du support.

Dans des modes particuliers de mise en œuvre, l'invention peut comporter en outre l'une ou plusieurs des caractéristiques suivantes, prises isolément ou selon toutes les combinaisons techniquement possibles.

Dans des modes particuliers de mise en œuvre, l'étape d'intégration de la source lumineuse au sein du support est suivie d'une étape de connexion électrique de la source lumineuse par un module de connexion électrique agencé dans l'enceinte de la machine-outil.

Dans des modes particuliers de mise en œuvre, le trou de la pièce est agencé de façon coaxiale avec un trou traversant constitué par l'orifice du support.

Selon un autre aspect, la présente invention concerne également un système pour la mise en œuvre du procédé précédemment décrit.

Le système comporte une pièce comprenant un trou traversant s'étendant depuis une face externe de la pièce jusqu'à une face interne de la pièce, un support comprenant un orifice traversant s'étendant depuis une face externe du support. La pièce est fixée au support de sorte que sa face interne est agencée contre la face externe dudit support et que le trou débouche entièrement dans ledit orifice. Le système comporte en outre, une source lumineuse fixée au support de sorte à émettre un rayonnement lumineux à travers lesdits trou et orifice, vers un appareil de mesure optique.

Dans des modes particuliers de réalisation, l'orifice est constitué par un trou avec lequel est agencé de façon coaxiale le trou traversant de la pièce.

Dans des modes particuliers de réalisation, la source lumineuse est amovible par rapport au support.

Dans des modes particuliers de réalisation, la source lumineuse est agencée dans une cavité du support dans laquelle débouche l'orifice.

Dans des modes particuliers de réalisation, le système comprend un module de connexion électrique configuré pour alimenter la source lumineuse en électricité lorsque le support est fixé sur un élément de structure de la machine-outil.

Dans des modes particuliers de réalisation, la source lumineuse comporte un élément de diffusion destiné à diffuser la lumière à travers le trou et l'orifice.

### Brève description des figures

D'autres caractéristiques et avantages de l'invention apparaîtront à la lecture de la description détaillée suivante donnée à titre d'exemple nullement limitatif, en référence aux dessins annexés dans lesquels :

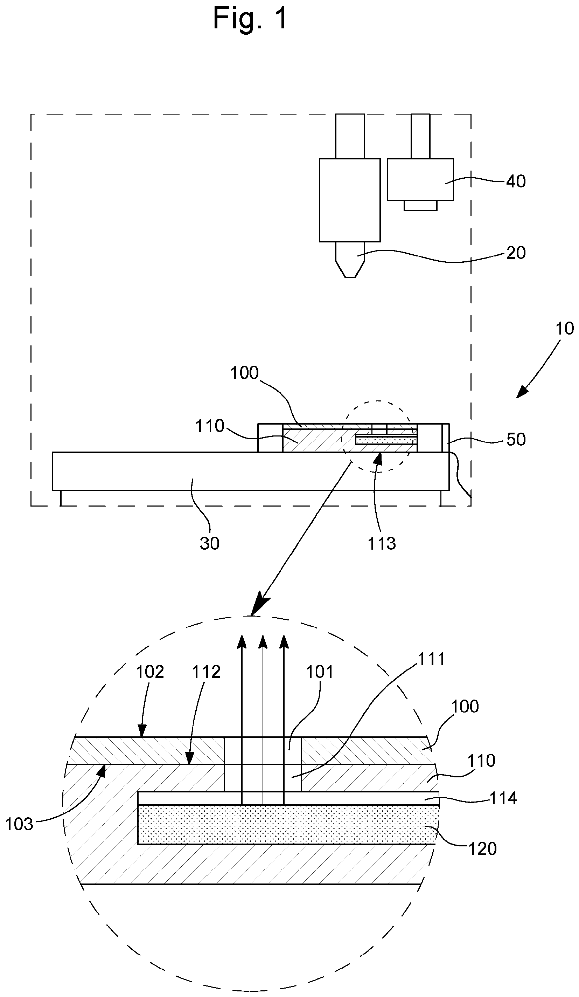

- la figure 1 représente schématiquement une enceinte d'une machine-outil à commande numérique dans laquelle est illustré un système pour la mise en œuvre du procédé selon l'invention, et une vue de détail d'une partie du système.

On note que les figures ne sont pas nécessairement dessinées à l'échelle pour des raisons de clarté.

### Description détaillée de l'invention

La présente invention concerne un procédé de détermination de la position d'une pièce 100, et plus précisément d'un objet de référence de ladite pièce 100, dans un repère orthonormé basé sur une structure d'une machine-outil. La détermination de la position d'un objet de référence de ladite pièce 100 permet de déterminer la trajectoire d'un outil 20 pour la réalisation d'une opération sur ladite pièce 100.

La présente invention concerne également un système 10 pour la mise en œuvre de ce procédé.

Dans des exemples de mise en œuvre de la présente invention, l'opération à réaliser sur la pièce 100 peut consister en un enlèvement de matière, par exemple un usinage, un polissage, etc., en des opérations d'assemblage, tel que du soudage, du collage, etc. ou en toute opération dans laquelle un outil 20 est déplacé suivant une trajectoire prédéterminée pour agir sur une pièce 100. Cette pièce 100 peut être formée par une pièce brute, une pièce semi-finie, etc.

Par ailleurs, il y a lieu de noter que l'ensemble des organes d'une machine-outil n'est pas décrit dans le présent texte dans la mesure où ils sont bien connus de l'homme du métier.

Le procédé selon la présente invention comporte une première étape consistant à maintenir en position la pièce 100 sur laquelle l'outil 20 de la machine-outil est destinée à réaliser une opération. Le maintien en position de la pièce 100 consiste à supprimer l'ensemble de ses degrés de liberté.

Cette pièce 100 est maintenue en position sur un support 110 fixé dans une enceinte de ladite machine-outil, de sorte à agencer un trou 101 traversant que comporte la pièce 100 en regard d'un orifice 111 traversant que comporte le support 110. Avantageusement, le trou 101 débouche entièrement dans ledit orifice 111, c'est-à-dire que l'ensemble de la surface de sa section droite débouche dans ledit orifice 111.

Comme le montre la figure 1, le trou 101 s'étend depuis une face externe 102 de la pièce 100 jusqu'à une face interne 103 de la pièce 100. Le terme « trou » définit dans le présente texte une ouverture cylindrique, de section droite préférentiellement circulaire.

Dans l'exemple de mise en œuvre représenté sur la figure 1, la pièce 100 est fixée au support 110 de sorte que sa face interne 103 soit agencée en appui contre une face externe 112 dudit support 110. La pièce 100 est fixée au support 110 par tout moyen approprié à la portée de l'homme du métier, de sorte à assurer son maintien en position.

En outre, l'orifice 111 s'étend depuis la face externe 112 du support 110. Préférentiellement, l'orifice 111 est constitué par un trou avec lequel le trou 101 de la pièce 100 est agencé de façon coaxiale. Cette caractéristique permet d'agencer de façon précise la pièce 100 par rapport au support 110.

Le support 110 peut être constitué par un élément de structure 30 de la machine-outil, telle qu'une table, ou peut être constitué par un dispositif rapporté, fixé sur l'élément de structure 30 de la machine-outil de façon appropriée à la portée de l'homme du métier.

Dans l'exemple représenté sur la figure 1, le support 110 est un dispositif rapporté fixé contre l'élément de structure 30 de la machine-outil, par une face interne 113. La pièce 100 peut être fixée au dispositif rapporté en amont, c'est-à-dire avant que ce dernier ne soit fixé sur l'élément de structure 30 de la machine-outil, ou peut être fixée au dispositif rapporté une fois que ce dernier a été fixé sur l'élément de structure 30.

Le procédé comporte par ailleurs une étape d'éclairage par une source lumineuse 120, de sorte à émettre un rayonnement lumineux depuis le support 110, vers un appareil de mesure optique 40 agencé dans l'enceinte de la machine-outil, à travers le trou 101 et l'orifice 111. Le rayonnement lumineux est représenté schématiquement par des flèches sur la vue de détail de la figure 1.

L'appareil de mesure optique 40 est configuré pour acquérir, selon un axe optique donné, par exemple perpendiculaire à la face externe 102 de la pièce 100, une image de la pièce 100 fixée sur le support 110, et est configuré pour identifier au moins un objet de référence de la pièce 100, tel qu'une arête ou des points de ladite pièce 100. Sur la base de cet objet de référence, la trajectoire de l'outil 20 est déterminée par une unité de commande pour réaliser des opérations sur la pièce 100. Dans l'exemple préféré de mise en œuvre de la présente invention, comme le montre la figure 1, l'objet de référence de la pièce est le centre du trou 101.

Un tel appareil de mesure optique est connu en soi de l'homme du métier. Il n'est donc pas décrit en détail dans le présent texte.

A la suite de l'étape d'éclairage, le procédé selon l'invention comporte une étape de lecture de la pièce 100 par l'appareil de mesure optique 40, de sorte que ce dernier détermine la position de ladite pièce 100 dans le repère orthonormé, sur la base de la reconnaissance de l'objet de référence de la pièce 100.

Ainsi, la position de la pièce 100 par rapport à l'outil 20, et plus précisément par rapport à la position d'un point de l'outil 20, est déterminée de façon précise et robuste. En effet, grâce à l'étape d'éclairage, et en particulier grâce au sens et à la direction de l'émission du rayonnement lumineux, l'objet de référence de la pièce 100, et plus particulièrement le trou 101, est facilement identifiable car il est mis en évidence par rétroéclairage.

Ainsi, le trou 101 peut précisément être identifié et la position de son centre peut être précisément déterminée. Par voie de conséquence, le déplacement de l'outil 20 pour réaliser des opérations sur la pièce 100 est effectué avec précision par rapport à la position du centre du trou 101.

La source lumineuse 120 est fixée au sein du support 110 lors d'une étape d'intégration réalisée avant l'étape d'éclairage. L'étape d'intégration est suivie d'une étape de connexion dans laquelle la source lumineuse 120 est connectée par un module de connexion 50 électrique agencé dans l'enceinte de la machine-outil et relié à une source d'alimentation en électricité.

Le module de connexion 50 est fixé sur l'élément de structure 30 de la machine-outil et est relié à une source d'électricité. Dans l'exemple représenté sur la figure 1, dans lequel le support 110 est un dispositif rapporté, la connexion est réalisée lorsque ce dernier est fixé sur l'élément de structure 30 de la machine-outil, par exemple par l'établissement d'un contact entre des connecteurs du module de connexion 50 avec des bornes de la source lumineuse 120 préalablement fixée au sein du support 110.

La source lumineuse 120 peut comporter un module d'éclairage (non représenté sur la figure) accouplé à un diffuseur, par exemple réalisé en matériau plastique, adapté à réfléchir la lumière émise par le module d'éclairage de façon diffuse de sorte que la luminance soit uniforme. Cette caractéristique participe à garantir une précision importante lors de l'identification de la position de la pièce 100, dans la mesure où il permet d'éviter d'éventuels phénomènes de réflexion pouvant fausser les mesures.

Avantageusement, la source lumineuse 120 peut être amovible par rapport au support 110, de sorte à pouvoir être retirée après la réalisation des opérations sur la pièce 100 ou pour la réalisation d'opérations de maintenance.

Dans l'exemple préféré de réalisation de l'invention, la source lumineuse 120 est agencée dans une cavité 114 du support 110 dans laquelle débouche l'orifice 111. La cavité 114 est donc adaptée à recevoir en engagement la source lumineuse 120, et plus précisément, le diffuseur.

Comme le montre la figure 1, la cavité 114 présente une ouverture débouchant sur un flanc du support 110 permettant d'engager facilement et rapidement la source lumineuse 120, et éventuellement de pouvoir la retirer.

Avantageusement, dans un exemple de mise en œuvre non représenté sur la figure, le support 110 peut maintenir en position plusieurs pièces 100 comportant chacune un trou 101 débouchant dans l'orifice 111 ou dans un orifice 111 associé, chaque trou 101 constituant un objet de référence d'une pièce 100.

La présente invention trouve avantageusement une application dans le domaine de la micromécanique et notamment dans le domaine de l'horlogerie.

En particulier, l'outil 20 peut être formé par un outil de coupe destiné à réaliser un enlèvement de matière de la pièce 100, cette dernière pouvant être formée par une aiguille. Plus précisément, la présente invention peut être mise en œuvre pour la réalisation d'une gouge sur la tête de l'aiguille, de façon concentrique au trou 101.

Il va de soi que l'invention n'est pas limitée à cette application et qu'elle pourrait être mise en œuvre dans tout domaine dans lesquels des opérations doivent être réalisées sur des pièces par un outil d'une machine-outil.

## Revendications

1. Procédé de détermination de la position d'une pièce (100) dans un repère orthonormé basé sur une structure d'une machine-outil à commande numérique afin de déterminer la trajectoire d'un outil (20) pour la réalisation d'une opération sur ladite pièce (100), le procédé comportant les étapes de :
- maintien en position de la pièce (100) sur un support (110) fixé dans une enceinte de ladite machine-outil, de sorte à agencer un trou (101) traversant que comporte la pièce (100) en regard d'un orifice (111) traversant que comporte le support (110), ledit trou (101) débouchant entièrement dans ledit orifice (111),
- éclairage par une source lumineuse (120), de sorte à émettre un rayonnement lumineux depuis le support (110), vers un appareil de mesure optique (40) agencé dans l'enceinte de la machine-outil, à travers le trou (101) et l'orifice (111),
- lecture de la pièce (100) par l'appareil de mesure optique (40), de sorte que ce dernier détermine la position de ladite pièce (100) dans le repère orthonormé ;
ledit procédé étant **caractérisé en ce qu'**il comporte, avant l'étape d'éclairage, une étape d'intégration de la source lumineuse (120) au sein du support (110).

2. Procédé selon la revendication 1, dans lequel l'étape d'intégration de la source lumineuse (120) au sein du support (110) est suivie d'une étape de connexion électrique de la source lumineuse (120) par un module de connexion (50) électrique agencé dans l'enceinte de la machine-outil.

3. Procédé selon l'une des revendications 1 à 2, dans lequel le trou (101) de la pièce (100) est agencé de façon coaxiale avec un trou traversant constitué par l'orifice (111) du support (110).

4. Système (10) pour la mise en œuvre du procédé selon l'une des revendications 1 à 3, **caractérisé en ce qu'**il comporte une pièce (100) comprenant un trou (101) traversant s'étendant depuis une face externe (102) de la pièce (100) jusqu'à une face interne (103) de la pièce (100), un support (110) comprenant un orifice (111) traversant s'étendant depuis une face externe (112) du support (110), la pièce (100) étant fixée au support (110) de sorte que sa face interne (103) soit agencée contre la face externe (112) dudit support (110) et que le trou (101) débouche entièrement dans ledit orifice (111), le système (10) comportant en outre, une source lumineuse (120) fixée au sein du support (110) de sorte à émettre un rayonnement lumineux à travers lesdits trou (101) et orifice (111), vers un appareil de mesure optique (40).

5. Système (10) selon la revendication 4, dans lequel l'orifice (111) est constitué par un trou (101) avec lequel est agencé de façon coaxiale le trou (101) traversant de la pièce (100).

6. Système (10) selon l'une des revendications 4 ou 5, dans lequel la source lumineuse (120) est amovible par rapport au support (110).

7. Système (10) selon l'une des revendications 4 à 6, dans lequel la source lumineuse (120) est agencée dans une cavité (114) du support (110) dans laquelle débouche l'orifice (111).

8. Système (10) selon l'une des revendications 4 à 7, comprenant un module de connexion (50) électrique configuré pour alimenter la source lumineuse (120) en électricité lorsque le support (110) est fixé sur un élément de structure (30) de la machine-outil.

9. Système (10) selon l'une des revendications 4 à 8, dans lequel la source lumineuse (120) comporte un élément de diffusion destiné à diffuser la lumière à travers le trou (101) et l'orifice (111).

## Patentansprüche

1. Verfahren zur Bestimmung der Position eines Werkstücks (100) in einem orthonormalen Bezugssystem, das auf einer Struktur einer numerisch gesteuerten Werkzeugmaschine basiert, um die Bahn eines Werkzeugs (20) zur Durchführung eines Bearbeitungsvorgangs an dem genannten Werkstück (100) zu bestimmen, wobei das Verfahren die folgenden Schritte umfasst:
- Halten des Werkstücks (100) in Position auf einem Träger (110), der in einem Innenraum der genannten Werkzeugmaschine befestigt ist, derart, dass ein Durchgangsloch (101) des Werkstücks (100) gegenüber einer Durchgangsöffnung (111) des Trägers (110) angeordnet ist, wobei das genannte Loch (101) vollständig in die genannte Öffnung (111) mündet,
- Beleuchten mittels einer Lichtquelle (120), derart, dass von dem Träger (110) aus Lichtstrahlung durch das Loch (101) und die Öffnung (111) hindurch zu einem optischen Messgerät (40) emittiert wird, das in dem Innenraum der Werkzeugmaschine angeordnet ist,
- Erfassen des Werkstücks (100) mittels des optischen Messgeräts (40), sodass dieses die Position des genannten Werkstücks (100) in dem orthonormalen Bezugssystem bestimmt;
wobei das genannte Verfahren **dadurch gekennzeichnet ist, dass** es vor dem Beleuchtungsschritt einen Schritt des Integrierens der Lichtquelle (120) in den Träger (110) umfasst.

2. Verfahren nach Anspruch 1, wobei auf den Schritt des Integrierens der Lichtquelle (120) in den Träger (110) ein Schritt des elektrischen Anschließens der Lichtquelle (120) mittels eines elektrischen Anschlussmoduls (50) folgt, das in dem Innenraum der Werkzeugmaschine angeordnet ist.

3. Verfahren nach einem der Ansprüche 1 oder 2, wobei das Loch (101) des Werkstücks (100) koaxial zu einem Durchgangsloch angeordnet ist, das durch die Öffnung (111) des Trägers (110) gebildet wird.

4. System (10) zur Durchführung des Verfahrens nach einem der Ansprüche 1 bis 3, **dadurch gekennzeichnet, dass** es ein Werkstück (100) umfasst, das ein Durchgangsloch (101) aufweist, welches sich von einer Außenfläche (102) des Werkstücks (100) bis zu einer Innenfläche (103) des Werkstücks (100) erstreckt, sowie einen Träger (110), der eine Durchgangsöffnung (111) aufweist, die sich von einer Außenfläche (112) des Trägers (110) erstreckt, wobei das Werkstück (100) derart an dem Träger (110) befestigt ist, dass seine Innenfläche (103) an der Außenfläche (112) des genannten Trägers (110) anliegt und das Loch (101) vollständig in die genannte Öffnung (111) mündet, wobei das System (10) ferner eine in dem Träger (110) befestigte Lichtquelle (120) umfasst, die dazu eingerichtet ist, Lichtstrahlung durch das genannte Loch (101) und die genannte Öffnung (111) hindurch zu einem optischen Messgerät (40) zu emittieren.

5. System (10) nach Anspruch 4, wobei die Öffnung (111) durch ein Loch (101) gebildet ist, zu dem das Durchgangsloch (101) des Werkstücks (100) koaxial angeordnet ist.

6. System (10) nach einem der Ansprüche 4 oder 5, wobei die Lichtquelle (120) gegenüber dem Träger (110) abnehmbar ist.

7. System (10) nach einem der Ansprüche 4 bis 6, wobei die Lichtquelle (120) in einem Hohlraum (114) des Trägers (110) angeordnet ist, in den die Öffnung (111) mündet.

8. System (10) nach einem der Ansprüche 4 bis 7, umfassend ein elektrisches Anschlussmodul (50), das dazu konfiguriert ist, die Lichtquelle (120) mit elektrischem Strom zu versorgen, wenn der Träger (110) an einem Strukturelement (30) der Werkzeugmaschine befestigt ist.

9. System (10) nach einem der Ansprüche 4 bis 8, wobei die Lichtquelle (120) ein Diffusionselement umfasst, das dazu bestimmt ist, das Licht durch das Loch (101) und die Öffnung (111) hindurch zu streuen.

## Claims

1. Method for determining the position of a part (100) in an orthonormal frame of reference based on a structure of a numerically controlled machine tool in order to determine the trajectory of a tool (20) for performing an operation on said part (100), the method including the steps of:
- holding the part (100) in position on a fixed carrier (110) inside an enclosure of said machine tool, so as to arrange a through-hole (101) comprised in the part (100) such that it faces a through-orifice (111) comprised in the carrier (110), said hole (101) opening out in its entirety inside said orifice (111),
- illuminating, using a light source (120), so as to emit light radiation from the carrier (110) towards an optical measuring instrument (40) arranged inside the enclosure of the machine tool, through the hole (101) and the orifice (111),
- reading the part (100) using the optical measuring instrument (40) so as to determine the position of said part (100) in the orthonormal frame of reference;
said method being **characterised in that** it includes, before the illumination step, a step of integrating the light source (120) into the carrier (110).

2. Method according to claim 1, wherein the step of integrating the light source (120) into the carrier (110) is followed by a step of electrically connecting the light source (120) by an electrical connection module (50) arranged in the enclosure of the machine tool.

3. Method according to one of claims 1 to 2, wherein the hole (101) in the part (100) is arranged coaxially with a through-hole constituted by the orifice (111) in the carrier (110).

4. System (10) for implementing the method according to one of claims 1 to 3, **characterised in that** it includes a part (100) comprising a through-hole (101) extending from an outer face (102) of the part (100) to an inner face (103) of the part (100), a carrier (110) comprising a through-orifice (111) extending from an outer face (112) of the carrier (110), the part (100) being fixed to the carrier (110) such that its inner face (103) is arranged against the outer face (112) of said carrier (110) and such that the hole (101) opens out in its entirety inside said orifice (111), the system (10) further including a light source (120) fixed into the carrier (110) so as to emit light radiation through said hole (101) and orifice (111) to an optical measuring instrument (40).

5. System (10) according to claim 4, wherein the orifice (111) is constituted by a hole (101) with which the through-hole (101) in the part (100) is coaxially arranged.

6. System (10) according to one of claims 4 or 5, wherein the light source (120) can be removed from the carrier (110).

7. System (10) according to one of claims 4 to 6, wherein the light source (120) is arranged in a cavity (114) in the carrier (110) into which the orifice (111) opens out.

8. System (10) according to one of claims 4 to 7, comprising an electrical connection module (50) configured to power the light source (120) with electricity when the carrier (110) is fixed to a structural element (30) of the machine tool.

9. System (10) according to one of claims 4 to 8, wherein the light source (120) includes a diffusing element for diffusing the light through the hole (101) and the orifice (111).
